# EUROPÄISCHE PATENTSCHRIFT

(11) **EP 1 644 218 B1**
(45) Veröffentlichungstag und Bekanntmachung des Hinweises auf die Patenterteilung: **16.04.2008**
(21) Anmeldenummer: 04741064.2
(22) Anmeldetag: 15.07.2004
(51) Int. Cl.: B60N 2/48

(54) **VERSTELLVORRICHTUNG ZUR HÖHENVERSTELLUNG EINER KOPFSTÜTZE**
ADJUSTER DEVICE FOR HEIGHT ADJUSTMENT OF A HEADREST
DISPOSITIF DE REGLAGE POUR LE REGLAGE EN HAUTEUR D'UN APPUIE-TETE

(30) Priorität: 15.07.2003 DE 10332097; 25.08.2003 DE 10339000; 10.10.2003 DE 20315594 U
(43) Veröffentlichungstag der Anmeldung: 12.04.2006
(73) Patentinhaber: Schukra Gerätebau AG, 2560 Berndorf (AT)
(72) Erfinder: KOPETZKY, Robert, A-8010 Graz (AT); SCHINDLEGGER, Walter, A-3353 Seitenstetten (AT)
(74) Vertreter: Banzer, Hans-Jörg
(86) Internationale Anmeldenummer: PCT/EP2004/007893
(87) Internationale Veröffentlichungsnummer: WO 2005/007446

(56) Entgegenhaltungen:
- DE-A- 4 031 656
- DE-A1- 3 141 515
- DE-A1- 4 325 996
- DE-C- 2 953 749
- FR-A- 2 749 812
- GB-A- 1 218 541
- GB-A- 2 057 255
- US-A- 4 222 608
- US-A- 4 765 683

## Beschreibung

Die vorliegende Erfindung betrifft eine Verstellvorrichtung zur Höhenverstellung einer Kopfstütze, beispielsweise einer Kopfstütze eines Sitzes in einem Kraftfahrzeug.

Sitze in Kraftfahrzeugen sind mit höhenverstellbaren Kopfstützen ausgestattet, um die Höhe der Kopfstütze einer Größe eines jeweiligen Benutzers des Sitzes, beispielsweise eines Fahrers, anzupassen. Um die Höhenverstellung bequemer zu gestalten, ist es bekannt, eine Verstellvorrichtung mit einem elektrisch betriebenen Antrieb zu verwenden. Eine derartige Verstellvorrichtung bietet beispielsweise auch den Vorteil, dass die Höhe der Kopfstütze anhand von gespeicherten Werten für verschiedene Fahrer automatisch eingestellt werden kann.

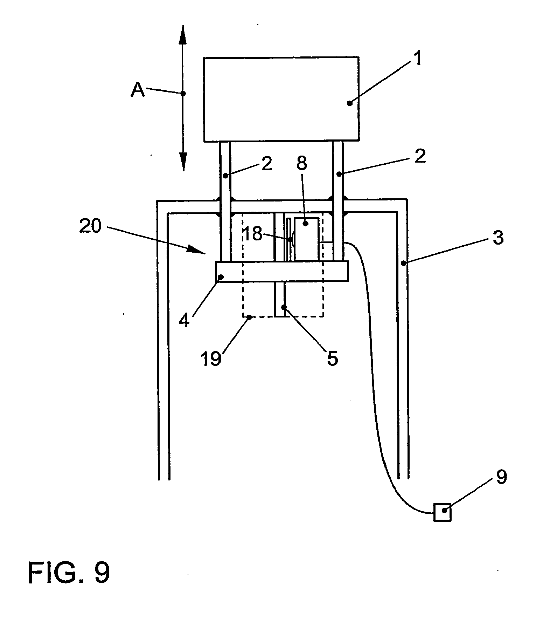

In Figur 9 ist eine derartige herkömmliche elektrische Verstellvorrichtung schematisch dargestellt. Eine Kopfstütze, bestehend aus einem Polster 1 und Stützstangen oder Stützholmen 2, ist dabei in eine Lehne 3 eines Sitzes eingesetzt. Die Stützstangen 2 gelangen dabei mit einem Verstellelement 4 einer Kopfstützenaufnahmeeinheit 20 in Eingriff, welches entlang einer auf einer Platte 19 montierten Führungsschiene 5 in vertikaler Richtung beweglich ist, um so die Kopfstütze wie durch einen Pfeil A angedeutet auf und ab zu bewegen. Zum Bewegen des Verstellelements 4 ist eine Antriebseinheit 8, welche beispielsweise einen Elektromotor und ein zwischen dem Elektromotor und dem Verstellelement angeordnetes Getriebe umfassen kann, vorgesehen. Die Übertragung der Bewegung der Antriebseinheit 8 kann dabei beispielsweise durch eine Zahnrad/Zahnstangenkombination 18 erfolgen, es sind aber auch andere Arten der Übertragung wie beispielsweise durch ein Gestänge oder Ähnliches denkbar. Die Stromzuführungen eines in der Antriebseinheit 8 enthaltenen Elektromotors sind nicht dargestellt.

Weiterhin ist eine externe Steuer- oder Betätigungseinheit 9 vorgesehen, mit der die Antriebseinheit 8 beispielsweise über Taste bedienbar ist, um so eine Aufwärts- oder Abwärtsbewegung der Kopfstütze auszulösen.

Eine derartige Anordnung hat mehrere wesentliche Nachteile: Zunächst ist die Antriebseinheit relativ nahe an einem Kopf des Benutzers des Sitzes angeordnet, so dass eine mit der Betätigung der Antriebsvorrichtung verbundene Geräuschentwicklung für den Benutzer störend sein kann.

Weiterhin weist die Verstellvorrichtung durch die Integration der Antriebseinheit ein relativ großes Volumen auf. In modernen Fahrzeugsitzen müssen jedoch eine Vielzahl von verschiedenen Elementen wie z. B. auch Lordosenstützen untergebracht werden, so dass der Einbau einer derart voluminösen Verstellvorrichtung sich unter Umständen schwierig gestalten kann.

Darüber hinaus ist bei der zuvor beschriebenen Verstellvorrichtung ungeachtet der Tatsache, dass die erwähnte Führungsschiene 5 vorgesehen ist, keine verkantfreie Bewegung der Kopfstütze gewährleistet, d. h. es ist nicht sichergestellt, dass die Verstellbewegung exakt in vertikaler Richtung auf die Kopfstütze übertragen wird, wobei dies insbesondere bei Wirken einer einseitigen Gegenlast auf die Kopfstütze gilt. Ein weiteres grundsätzliches Problem ist die Wirkungsgradoptimierung, so dass die Kopfstütze mit möglichst geringem Aufwand verstellt werden kann.

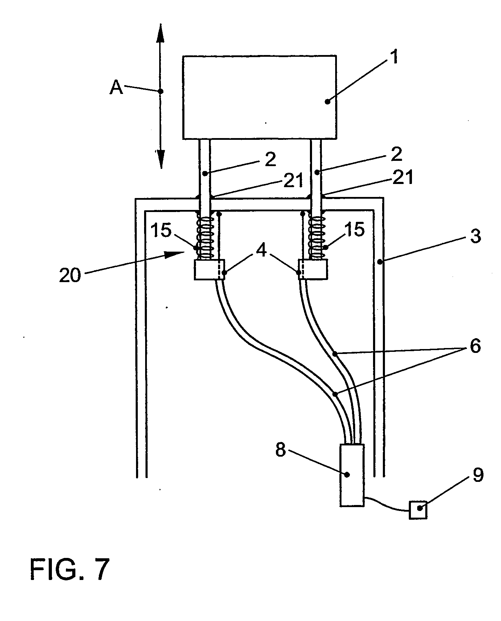

Die Vorrichtung aus Figur 7 hat weiterhin den Nachteil, dass ein Raum zwischen den beiden Stützholmen 2 in der Rückenlehne durch die Antriebseinheit 8, die Führungsschiene 5, die Platte 19 und das Verstellelement 4 ausgefüllt ist. Dieser Bereich ist jedoch für den Komfort des Sitzes sehr kritisch, er muss so ausgestaltet sein, dass der Bereich zwischen den Schultern bzw. den Schulterblättern eines Fahrers gut abgestützt wird. Hierzu kann es gegebenenfalls wünschenswert sein, Verstellmechanismen, mit denen eine Form der Lehne in diesem Bereich verändert werden kann, einzubauen, welche ebenfalls Platz benötigen.

Aus der FR 2 749 812 A ist eine Verstellvorrichtung gemäß dem Oberbegriff des Anspruchs 1 bekannt.

Weitere Verstellvorrichtungen sind aus der DE 4 031 656 A, der GB 2 057 255 A, der GB 1 218 541 A, der US 4,222,608, der DE 29 53 749 C2, der DE 3 141 515 A1, der US 4,765,683 oder der DE 43 25 996 A1 bekannt.

Es ist daher eine Aufgabe der vorliegenden Erfindung, diese Probleme zu vermeiden. Insbesondere ist es eine Aufgabe der vorliegenden Erfindung, eine Verstellvorrichtung zur Höhenverstellung einer Kopfstütze bereitzustellen, bei der eine Geräuschbelästigung eines Benutzers vermindert ist und welche hinsichtlich des Einbaus in eine Sitzlehne flexibler ist. Eine weitere Aufgabe der vorliegenden Erfindung ist die Bereitstellung einer Verstellvorrichtung zur Höhenverstellung einer Kopfstütze, welche hinsichtlich des benötigten Bauraums und des Wirkungsgrads optimiert ist. Darüber hinaus soll eine Verstellvorrichtung zur Höhenverstellung einer Kopfstütze bereitgestellt werden, welche eine verkantfreie Verstellung bzw. Bewegung der Kopfstütze ermöglicht. Schließlich ist es eine Aufgabe der vorliegenden Erfindung, eine Verstellvorrichtung zur Höhenverstellung einer Kopfstütze bereitzustellen, welche zwischen Stützholmen der Kopfstütze keinen oder nur wenig Platz benötigt, so dass dieser Raum für andere Zwecke nutzbar ist.

Die vorliegende Erfindung stellt eine Verstellvorrichtung zur Höhenverstellung einer Kopfstütze mit den Merkmalen des Anspruchs 1, bereit. Die Unteransprüche definieren jeweils bevorzugte und vorteilhafte Ausführungsbeispiele der Erfindung.

Erfindungsgemäß wird eine Verstellvorrichtung zur Höhenverstellung einer Kopfstütze eines Sitzes, umfassend eine Kopfstützenaufnahmeeinheit mit in mindestens eine Verstellrichtung beweglichen oder verstellbaren Verstellmitteln, welche insbesondere derart ausgestaltet sein können, dass sie mit einer in die Kopfstützenaufnahmeeinheit einsetzbaren Kopfstütze in Eingriff gelangen können bzw. damit koppelbar sind, und Antriebsmittel zum Erzeugen einer Verstellbewegung für die Verstellmittel bereitgestellt, bei der die Antriebsmittel eine von der Kopfstützenaufnahme räumlich oder örtlich getrennte Einheit bilden und bei der vorzugsweise flexible Übertragungsmittel zur Übertragung der Verstellbewegung der Antriebsmittel auf die Verstellmittel bereitgestellt sind. Für die mindestens zwei Aufnahmeeinheiten sind getrennte Übertragungsmittel bereitgestellt. Die Verstellbewegung wird von den Antriebsmitteln zunächst auf gemeinsame Übertragungsmittel übertragen, wobei Verteilmittel die Verstellbewegung von den gemeinsamen Übertragungsmitteln auf die getrennten Übertragungsmittel für die mindestens zwei Aufnahmeeinheiten übertragen.

Durch die Trennung der Antriebsmittel von der Kopfstützenaufnahme und durch die Verwendung von vorzugsweise flexiblen, d. h. biegsamen, Übertragungsmitteln können die Antriebsmittel im Wesentlichen unabhängig von der Kopfstützenaufnahme im Sitz platziert werden, was eine flexiblere Raumaufteilung ermöglicht und es zudem ermöglicht, die Antriebsmittel entfernt von einem Kopf eines Benutzers des Sitzes anzuordnen, um eine Geräuschbelästigung zu verringern.

Die Antriebsmittel können einen Elektromotor und/oder ein Getriebe zur Einkopplung oder Übertragung der erzeugten Verstellbewegung auf die Übertragungsmittel umfassen, wobei grundsätzlich auch eine manuelle Betätigung der Antriebsmittel, z. B. über ein an der Seite des Sitzes angebrachtes Handrad oder dergleichen, denkbar ist.

In einem bevorzugten Ausführungsbeispiel umfassen die Übertragungsmittel mindestens einen Bowdenzug. Es ist sowohl eine Anordnung mit zwei Bowdenzügen, welche Zugkräfte in entgegengesetzten Richtungen übertragen, als auch die Verwendung eines Bowdenzugs für eine Verstellung primär in eine erste Richtung in Kombination mit Energiespeichermitteln, z. B. Federmitteln, welche bei der Verstellung in die erste Richtung Energie aufnehmen und diese zur Verstellung oder Unterstützung der Verstellung in eine entgegengesetzte zweite Richtung wieder abgeben, denkbar.

In einem anderen bevorzugten Ausführungsbeispiel umfassen die Übertragungsmittel mindestens eine flexible Welle, welche an einem Ende ein Gewinde aufweisen kann, welches mit einem an den Verstell- oder Schiebemitteln ausgebildeten Gewinde in Eingriff steht. Durch diese Gewinde kann entsprechend einem Spindelantrieb eine Drehbewegung der flexiblen Welle in eine lineare Bewegung der Verstellmittel umgesetzt werden.

Die zuvor beschriebene Verwendung lediglich eines vorzugsweise flexiblen Übertragungsmittels, z. B. eines Bowdenzugs oder einer drehbaren Welle, ist besonders vorteilhaft, um den benötigten Bauraum weiter zu reduzieren, was auch eine entsprechende Kostenreduktion mit sich bringt.

Die Verstellvorrichtung kann weiterhin Betätigungsmittel zum Betätigen der Antriebsmittel umfassen, beispielsweise Betätigungsschalter für den Elektromotor oder ein Handrad etc.

Die Erfindung wird im Folgenden unter Bezugnahme auf die beigefügte Zeichnung anhand bevorzugter Ausführungsbeispiele näher erläutert. Es zeigen:
Figur 1 eine Verstellvorrichtung, welche kein Ausführungsbeispiel der vorliegenden Erfindung darstellt,
Figur 2 eine Antriebseinheit der Verstellvorrichtung von Figur 1,
Figur 3 eine weitere Verstellvorrichtung, welche kein Ausführungsbeispiel der vorliegenden Erfindung darstellt,
Figur 4 eine weitere Verstellvorrichtung, welche kein Ausführungsbeispiel der vorliegenden Erfindung darstellt,
Figur 5 eine weitere Verstellvorrichtung, welche kein Ausführungsbeispiel der vorliegenden Erfindung darstellt,
Figur 6 eine weitere Verstellvorrichtung, welche kein Ausführungsbeispiel der vorliegenden Erfindung darstellt,
Figur 7 eine weitere Verstellvorrichtung, welche kein Ausführungsbeispiel der vorliegenden Erfindung darstellt,
Figur 8 ein Ausführungsbeispiel einer erfindungsgemäßen Verstellvorrichtung, und
Figur 9 eine Verstellvorrichtung gemäß dem Stand der Technik.

Gleiche Elemente sind in sämtlichen Figuren mit den gleichen Bezugszeichen bezeichnet.

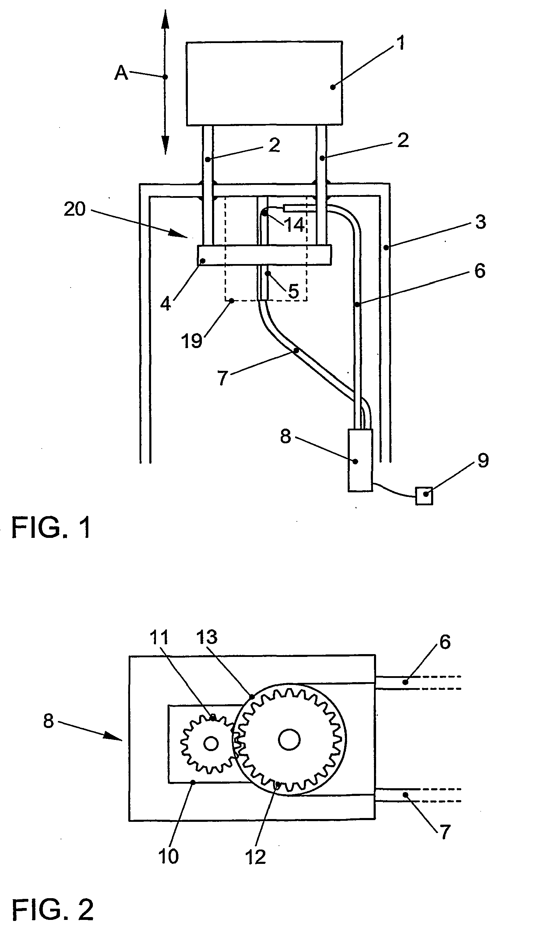

In Figur 1 ist ein Beispiel einer Verstellvorrichtung, welche kein Ausführungsbeispiel der vorliegenden Erfindung darstellt, dargestellt.

Bei dieser Verstellvorrichtung ist auf einer gestrichelt dargestellten Platte 19 eine Führungsschiene 5 montiert, entlang der sich ein Verstellelement 4 auf und ab bewegen kann. In die Lehne 3 kann eine Kopfstütze bestehend aus einem Polster 1 und zwei Stützstangen oder Stützholmen 2 eingesetzt werden und gelangt dabei mit dem Verstellelement in Eingriff, d. h. eine Bewegung des Verstellelements bewegt gleichzeitig die Kopfstütze wie durch einen Pfeil A angedeutet nach oben oder nach unten. Das Verstellelement 4 ist Teil einer Kopfstützenaufnahmeeinheit 20, mit welcher die Kopfstütze koppelbar ist, bzw. in welche die Kopfstütze einzusetzen ist.

Weiterhin ist eine Antriebseinheit 8 vorhanden, welche prinzipiell an einer beliebigen geeigneten Stelle im Sitz, bevorzugt entfernt von einem Kopf eines Benutzers, eingebaut werden kann. Mit der Antriebseinheit 8 ist eine Betätigungseinheit 9 verbunden, mittels der ein Benutzer beispielsweise eine Verstellrichtung auswählen kann.

Die Übertragung einer Verstellbewegung der Antriebseinheit 8 auf das Verstellelement 4 erfolgt über zwei Bowdenzüge 6 und 7. Dieses Bowdenzüge wirken beide als Zugelemente. Jeweils ein erstes Ende der Bowdenzüge ist an der Antriebseinheit 8 angebracht, ein zweites Ende ist mit einer Hülle des jeweiligen Bowdenzugs an der Platte 19 oder an der Führungsschiene 5 befestigt und dort abgestützt. Die Enden von Kabeln oder Drähten der Bowdenzüge 6 und 7 greifen an dem Verstellelement 4 derart an, dass eine über den Bowdenzug 6 ausgeübte Zugkraft das Verstellelement 4 nach oben und eine über den Bowdenzug 7 ausgeübte Zugkraft das Verstellelement 4 nach unten bewegt. Dabei können Umlenkrollen wie eine Umlenkrolle 14 vorgesehen sein, um eine günstige Führung der Kabel zu gewährleisten. Selbstverständlich sind Variationen der Führung der Bowdenzüge abweichend von Figur 1 möglich.

Zum Bewegen des Verstellelements und damit der Kopfstütze nach oben muss bei dieser Verstellvorrichtung der Bowdenzug 6 gespannt und der Bowdenzug 7 entspannt werden. Umgekehrt muss für eine Bewegung nach unten der Bowdenzug 7 gespannt und der Bowdenzug 6 entspannt werden. Ein möglicher Antriebsmechanismus hierfür wird nun unter Bezugnahme auf Figur 2 erläutert.

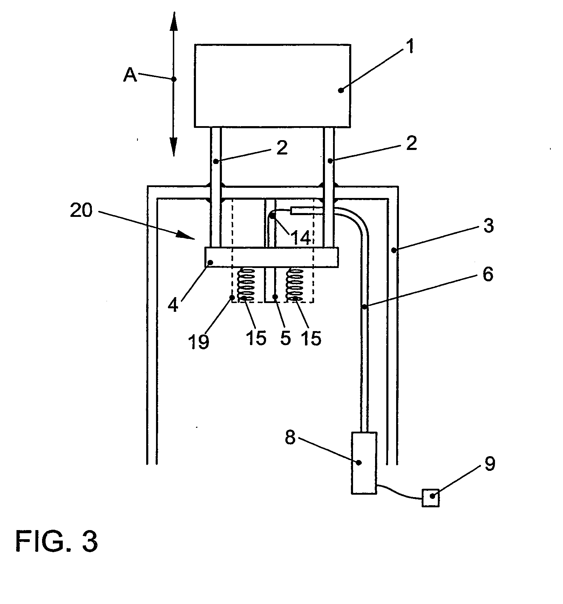

In Figur 2 ist eine Antriebseinheit 8, welche sowohl für die in Figur 1 dargestellte Verstellvorrichtung als auch für weiter unten unter Bezugnahme auf Figur 3 bis Figur 8 beschriebene Verstellvorrichtungen verwendet werden kann, dargestellt.

Die Antriebseinheit 8 umfasst dabei einen Elektromotor 10, welcher ein kleines Zahnrad 11 antreibt. Das kleine Zahnrad 11 steht mit einem großen Zahnrad 12 in Eingriff und bildet mit ihm ein Getriebe. Das große Zahnrad 12 ist über eine Achse mit einer Trommel 13 verbunden, an welcher die Bowdenzüge 6 und 7 in entgegengesetzten Richtungen angreifen, so dass bei einer Drehung der Trommel 13 durch das Zahnrad 12 ein Bowdenzug abgewickelt und somit entspannt und der andere Bowdenzug aufgewickelt und somit gespannt wird.

Selbstverständlich kann das durch die Zahnräder 11 und 12 gebildete Getriebe auch aufwändiger und mit mehr Zahnrädern ausgeführt sein. Die Dimensionierung der Zahnräder erfolgt dabei je nach einer gewünschten Umdrehungsgeschwindigkeit der Trommel 13 abhängig von einer Umdrehungsgeschwindigkeit des Elektromotors 10.

In Figur 3 ist eine weitere Verstellvorrichtung, welche kein Ausführungsbeispiel der vorliegenden Erfindung darstellt, dargestellt. Um Wiederholungen zu vermeiden, werden lediglich die Unterschiede zu der in Figur 1 dargestellten Verstellvorrichtung erläutert.

Die Übertragung der Verstellbewegung der Antriebseinheit erfolgt bei dem in Figur 3 dargestellten Ausführungsbeispiel über einen einzigen Bowdenzug 6, was den Vorteil hat, dass auch nur dieser eine Bowdenzug durch den Sitz verlegt werden muss. Zusätzlich sind Federn 15 vorgesehen. Die Federn 15 sind dabei als Zugfedern ausgelegt, d. h., wenn sich das Verstellelement 4 in seiner untersten Position befindet, sind die Federn entspannt, befindet sich das Verstellelement 4 hingegen in der Zeichnung weiter oben, sind die Federn 15 gegenüber der Ruhelage gedehnt und üben so eine Kraft auf das Verstellelement 4 aus, welche in der Zeichnung nach unten gerichtet ist. Das Schiebelement und somit die Kopfstütze kann nach oben bewegt werden, indem der Bowdenzug 6 gespannt, d. h. eine Zugkraft auf das Seil des Bowdenzugs 6 ausgeübt wird. Dies kann mit einer Antriebseinheit 8 ähnlich der in Figur 2 gezeigten geschehen. Wird der Bowdenzug hingegen entspannt, ziehen die Federn 15 das Verstellelement 4 wieder nach unten. Selbstverständlich ist auch eine umgekehrte Anordnung der Federn und des Bowdenzuges möglich. Ebenso ist eine Anordnung der Federn als Druckfedern anstelle der Anordnung als Zugfedern denkbar. Schließlich sollte auch darauf hingewiesen werden, dass anstelle der Federn 15 im Prinzip allgemein mechanische Energiespeichermittel, insbesondere andere elastische Elemente oder dergleichen, eingesetzt werden können, welche beim Spannen des Bowdenzugs 6 Energie aufnehmen können, um beim Entspannen des Bowdenzugs 6 die gespeicherte Energie wieder abzugeben und somit eine Verstellung des Verstellelements 4 in die zur Zugrichtung des Bowdenzugs 6 entgegengesetzte Richtung zu ermöglichen bzw. diese zu unterstützen.

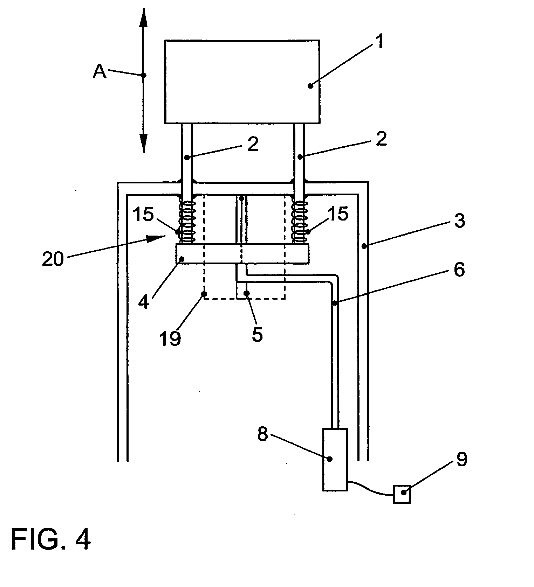

In Figur 4 ist eine weitere Verstellvorrichtung dargestellt, welche kein Ausführungsbeispiel der vorliegenden Erfindung darstellt.

Bei der in Figur 4 gezeigten Verstellvorrichtung greift lediglich ein Bowdenzug 6 an dem Verstellelement 4 an, wobei im Gegensatz zu den zuvor beschriebenen Verstellvorrichtungen die Kopfstütze durch die Verstellbewegung des Bowdenzug 6 nicht nach oben gezogen, sondern nach oben geschoben wird. Zu diesem Zweck stützt sich die Hülle des Bowdenzug 6 an dem Verstellelement 4 ab, während das Kabel oder der Draht des Bowdenzug 6 durch das Verstellelement 4 hindurch nach oben geführt und dort an einer geeigneten Stelle, beispielsweise an der Lehne 3 oder einem entsprechenden Rahmen, befestigt ist. Es sind wiederum Federn 15 vorgesehen, wobei im Gegensatz zu Figur 3 die Federn gemäß der Verstellvorrichtung von Figur 4 an dem der Hülle des Bowdenzugs 6 gegenüberliegenden Seite des Verstellelements 4 auf den Stützstangen oder Stützholmen 2 angebracht sind. Die Federn 15 sind als Druckfedern ausgelegt, so dass bei Schieben des Verstellelements 4 durch den Bowdenzug 6 nach oben die Federn 15 zusammengedrückt, d. h. komprimiert werden. Bei Entspannen des Bowdenzug 6 erfolgt durch die Dekompression der Federn 15 eine Abwärtsbewegung des Verstellelements 4 mit der damit gekoppelten Kopfstütze, wobei zu diesem Zweck die Federn 15 an einer geeigneten Stelle in der Lehne 3 abgestützt sind.

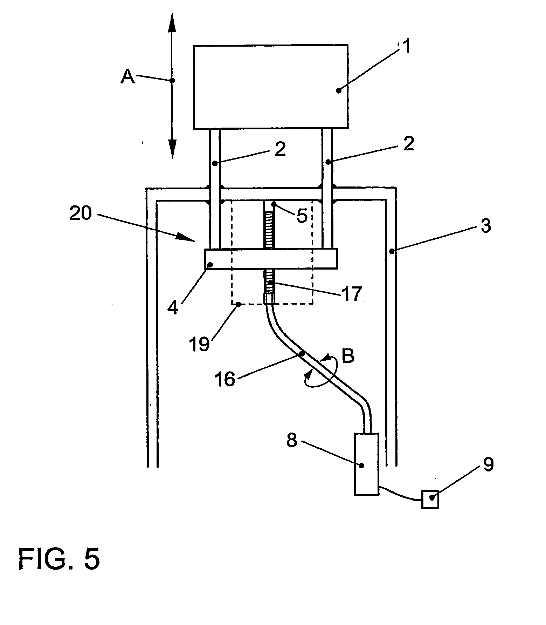

In Figur 5 ist eine weitere Verstellvorrichtung, welche kein Ausführungsbeispiel der vorliegenden Erfindung darstellt, dargestellt. Wiederum werden nur die Unterschiede zu den oben dargestellten Verstellvorrichtungen dargestellt.

In der in Figur 5 dargestellten Verstellvorrichtung erfolgt die Übertragung der Verstellbewegung der Antriebseinheit 8 auf das Verstellelement 4 durch eine flexible Welle 16, welche eine Drehbewegung wie durch einen Pfeil B angedeutet abhängig von der von der Antriebseinheit 8 erzeugten Verstellbewegung ausführt. Am Ende der flexiblen Welle ist ein Gewindeabschnitt 17 ausgebildet, welcher mit einem entsprechenden Innengewinde des Verstellelements 4 in Eingriff steht. Bei der dargestellten Verstellvorrichtung ist der Gewindeabschnitt 17 oberhalb der Führungsschiene 5, d. h. parallel zu der Zeichenebene angeordnet. Es ist aber auch eine Anordnung neben der Führungsschiene 5 etc. denkbar.

Durch den Gewindeabschnitt 17 und das entsprechende Innengewinde des Verstellelements 4 wird ein Spindelantrieb gebildet, d. h. die Rotationsbewegung der flexiblen Welle 16, welche auch als Torsionswelle bezeichnet werden kann, wird in eine lineare Bewegung des Verstellelements 4 und somit auch der Kopfstütze umgesetzt.

Bei dieser Verstellvorrichtung ist ebenfalls nur ein flexibles Übertragungsmittel, nämlich die flexible Welle 16, zur Bewegungsübertragung nötig. Zudem kann auch auf die Federn der in Figur 3 dargestellten Verstellvorrichtung verzichtet werden, so dass weniger Teile benötigt werden.

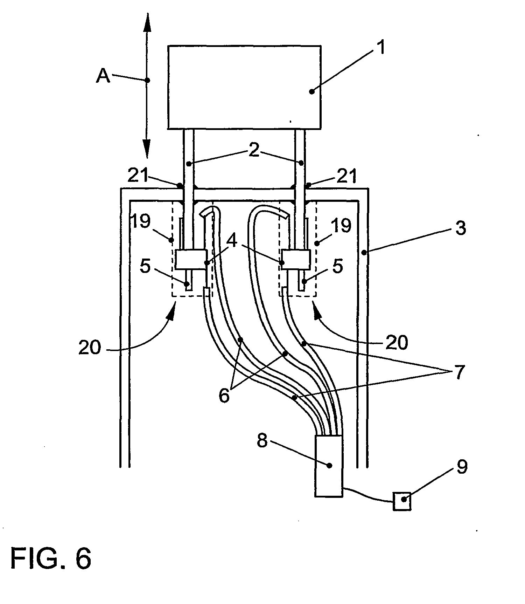

In Figur 6 ist eine weitere Verstellvorrichtung dargestellt, welche kein Ausführungsbeispiel der vorliegenden Erfindung darstellt, und deren Funktionsweise ähnlich zu der Funktionsweise der in Figur 4 dargestellten Verstellvorrichtung ist, so dass nachfolgend lediglich die maßgeblichen Unterschiede zu der in Figur 4 dargestellten Verstellvorrichtung erläutert werden.

Im Gegensatz zu den vorstehend beschriebenen Verstellvorrichtungen sind zwei Aufnahmeeinheiten 20 vorgesehen. Eine Kopfstütze, bestehend aus einem Polster 1 und zwei Stützstangen oder Stützholmen 2, kann durch Öffnungen 21 in eine Lehne 3 eingesetzt werden, wobei jeder Stützholm 2 in einer Aufnahmeeinheit 20 aufgenommen wird.

Jede Aufnahmeeinheit 20 umfasst dabei ein Verstellelement 4, welches mit dem jeweiligen Stützholm 2 in Eingriff gelangt und auf einer auf einer Platte 19 montierten Führungsschiene 5 auf und ab bewegbar ist. Eine gleichzeitige synchrone Bewegung der Verstellelemente 4 in beiden Aufnahmeeinheiten bewegt somit die Kopfstütze wie durch einen Pfeil A angedeutet nach oben oder nach unten. Weiterhin ist wiederum eine Antriebseinheit 8 vorgesehen, welche prinzipiell an einer beliebigen geeigneten Stelle im Sitz, bevorzugt entfernt von einem Kopf eines Benutzers, eingebaut werden kann. Mit der Antriebseinheit 8 ist eine Betätigungseinheit 9 verbunden, mittels der ein Benutzer beispielsweise eine Verstellrichtung auswählen kann.

Die Übertragung einer Verstellbewegung der Antriebseinheit 8 auf die Verstellelemente 4 erfolgt jeweils über zwei Bowdenzüge 6 und 7. Diese Bowdenzüge wirken jeweils als Zugelemente. Jeweils ein erstes Ende der Bowdenzüge 6, 7 ist an der Antriebseinheit 8 angebracht, ein zweites Ende ist mit einer Hülle des jeweiligen Bowdenzugs 6, 7 an der jeweiligen Platte 19 oder auch an der Führungsschiene 5 befestigt und dort abgestützt. Die Enden von Kabeln oder Drähten der Bowdenzüge 6 und 7 greifen an den Verstellelementen 4 derart an, dass eine über die Bowdenzüge 6 ausgeübte Zugkraft die Verstellelemente 4 nach oben und eine über die Bowdenzüge 7 ausgeübte Zugkraft die Verstellelemente 4 nach unten bewegt. Es können auch Umlenkrollen vorgesehen sein, um eine günstige Führung der Kabel zu gewährleisten. Selbstverständlich sind Variationen der Führung der Bowdenzüge abweichend von Figur 6 möglich.

Wie in Figur 6 zu sehen, ist der Raum zwischen den Aufnahmeeinheiten 20 nicht oder kaum belegt, so dass hier die Lehne entsprechend Komfortanforderungen ohne Rücksicht auf die Aufnahmeeinheiten ausgestaltet werden kann. Je nach Anforderungen können die Bowdenzüge 6, 7 auch auf die Außenseiten der Aufnahmeeinheiten 20 verlegt werden, falls diese einer Ausgestaltung der Lehne hinderlich sein sollten.

Zum Bewegen der Verstellelemente 4 und damit der Kopfstütze nach oben müssen in der vorliegenden Verstellvorrichtung wie bei dem Ausführungsbeispiel von Figur 1 die Bowdenzüge 6 gespannt und die Bowdenzüge 7 entspannt werden. Umgekehrt müssen für eine Bewegung nach unten die Bowdenzüge 7 gespannt und die Bowdenzüge 6 entspannt werden. Das Spannen bzw. Entspannen muss dabei für die Bowdenzüge 6 und 7 synchron erfolgen, so dass sich die Verstellmittel 4 synchron nach oben oder nach unten bewegen. Dementsprechend kann als möglicher Antriebsmechanismus der Antriebsmechanismus aus Figur 2 verwendet werden.

In Figur 7 ist eine weitere Verstellvorrichtung, welche kein Ausführungsbeispiel der vorliegenden Erfindung darstellt, dargestellt. Um Wiederholungen zu vermeiden, werden lediglich die Unterschiede zu der in Figur 6 dargestellten Verstellvorrichtung erläutert.

Bei der in Figur 7 dargestellten Verstellvorrichtung umfasst jede Aufnahmeeinheit 20 ein Verstellelement 4 und eine Feder 15, welche auf den jeweiligen Stützholm 2 geschoben und zwischen der Lehne 3 und dem Verstellelement 4 eingespannt ist. Bei diesem Ausführungsbeispiel sind keine Platten 19 und keine Führungsschienen 5 vorgesehen. Die Führung der Stützholme 2 erfolgt dabei durch die Öffnungen 21.

Die Verstellung der Verstellelemente 4 erfolgt jeweils durch einen einzigen Bowdenzug 6, wobei im Gegensatz zu dem zuvor beschriebenen Ausführungsbeispiel die Kopfstütze durch die Verstellbewegung der Bowdenzüge 6 nicht nach oben gezogen, sondern nach oben geschoben wird. Zu diesem Zweck stützen sich die Hüllen der Bowdenzüge 6 jeweils an einem Verstellelement 4 ab, während die Kabel oder die Drähte der Bowdenzüge 6 durch das jeweilige Verstellelement 4 hindurch nach oben geführt und dort an einer geeigneten Stelle, beispielsweise an der Lehne 3 oder einem entsprechenden Rahmen, befestigt sind. Wie bei dem in Figur 4 dargestellten Mechanismus sind dabei Federn 15 vorgesehen, während der in Figur 6 dargestellte Mechanismus im Prinzip dem Mechanismus aus Figur 1 entspricht.

Die Federn 15 sind dabei wie in Figur 4 als Druckfedern ausgelegt, so dass bei Schieben der Verstellelemente 4 nach oben durch den Bowdenzug 6 die Federn 15 zusammengedrückt, das heißt komprimiert werden. Bei Entspannen der Bowdenzüge 6 erfolgt durch die Dekompression der Federn 15 eine Abwärtsbewegung der Verstellelemente 4 mit der damit gekoppelten Kopfstütze.

Die Kopplung der Bowdenzüge 6 mit der Antriebseinheit 8 ist dabei wiederum derart, dass eine von der Antriebseinheit 8 erzeugte Verstellbewegung gleichermaßen auf die Bowdenzüge 6 übertragen wird, so dass entsprechend die beiden Verstellelemente 4 und die damit gekoppelten Stützholme 2 ungeachtet der Tatsache, dass zwei Bowdenzüge 6 verwendet werden, in gleichem Umfang nach oben bzw. nach unten bewegt werden. Selbstverständlich kann auch in dieser Verstellvorrichtung eine Platte und eine Führungsschiene ähnlich wie in Figur 6 dargestellt vorgesehen sein. Umgekehrt kann die Platte 19 und die Führungsschiene 5 in Figur 6 auch eingespart werden, falls die Bowdenzüge sonst in geeigneter Weise abgestützt werden können, und die Führung durch die Öffnung 21 ausreicht.

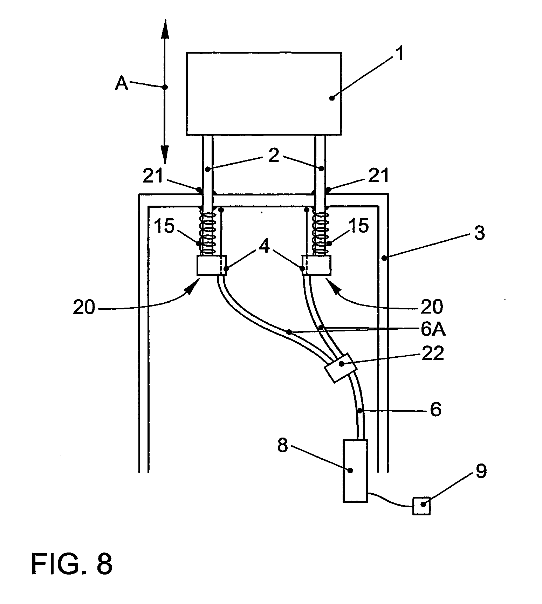

In Figur 8 ist ein Ausführungsbeispiel der vorliegenden Erfindung dargestellt.

Das in Figur 8 dargestellte Ausführungsbeispiel entspricht dabei im Wesentlichen der Verstellvorrichtung von Figur 7, so dass nur die Unterschiede erläutert werden.

Im Gegensatz zu Figur 7 wird die Verstellbewegung der Antriebseinheit 8 zunächst nur auf einen einzigen Bowdenzug 6 übertragen. Eine so genannte Splitbox 22 überträgt diese Verstellbewegung dann in gleicher Weise auf zwei Bowdenzüge 6A, welche wie die Bowdenzüge 6 aus Figur 7 mit den Verstellelementen 4 gekoppelt sind und in gleicher Weise wie dort beschrieben zur Verstellung der Verstellelemente 4 dienen. Die Splitbox 22 kann in einfacher Weise ausgeführt sein, indem die Kabel des Bowdenzugs 6 und der Bowdenzüge 6A direkt miteinander verbunden sind, oder es kann beispielsweise eine Kopplung über Kabeltrommeln, Zahnräder oder andere mechanische Elemente vorgesehen sein.

Selbstverständlich ist es bei den in Figur 7 und Figur 8 dargestellten Verstellvorrichtungen - ähnlich der Verstellvorrichtung aus Figur 3 - auch möglich, die Federn als Zugfedern und die Bowdenzüge als Zugelemente einzusetzen. In diesem Fall würden beispielsweise Bowdenzüge die Verstellelemente 4 nach unten ziehen und dabei eine Feder spannen. Beim Entspannen der Bowdenzüge würde sich entsprechend die Feder wieder entspannen und somit die Verstellmittel 4 nach oben ziehen. Desgleichen ist auch eine Vertauschung der Wirkrichtung der Bowdenzüge und der Federn möglich.

Bei den in Figuren 6 bis 8 dargestellten Verstellvorrichtungen bleibt der Raum zwischen den Aufnahmeeinheiten 20 frei, so dass hier die Lehne 3 unabhängig von der Verstellvorrichtung ausgestaltet werden kann.

In den dargestellten Verstellvorrichtungen sind die Antriebsmittel jeweils entfernt von der Kopfstütze angeordnet, so dass eine Geräuschbelästigung eines Benutzers des Sitzes gering gehalten wird.

Schließlich kann durch die Verwendung von zwei Aufnahmeeinheiten für die beiden Stützholme verhindert werden, dass bei Wirken einer einseitigen Gegenlast auf die Kopfstütze bzw. auf das Polster der Kopfstütze ein Verkanten der Kopfstütze auftritt. Selbst bei Wirken einer derartigen einseitigen Gegenlast auf die Kopfstütze ist somit eine verkantfreie Verstellung der Kopfstütze gewährleistet, da die Verstellbewegung gleichmäßig auf die beiden Stützholme 2 übertragen werden kann. Dieser Effekt ist auch dann vorhanden, wenn der Raum zwischen den Aufnahmeeinheiten 20 nicht frei ist, z. B. wenn aus Platzgründen die Antriebseinheit 8 zwischen den Aufnahmeeinheiten 20 angeordnet ist.

Selbstverständlich ist die Erfindung nicht auf die Verwendung von Bowdenzügen beschränkt, sondern es kann grundsätzlich jedes geeignete Übertragungsmittel eingesetzt werden, welches eine Übertragung einer Verstellbewegung von der Antriebseinheit 8 auf die Verstellelemente 4 ermöglicht.

Ebenso sind weitere Variationen der dargestellten Ausführungsbeispiele denkbar. Beispielsweise kann mehr als eine Führungsschiene vorhanden sein, die Anzahl der Federn und die Stärke der Federn kann variiert werden usw.. Als Antriebseinheit kann prinzipiell auch eine Einheit zur manuellen Betätigung der Verstellvorrichtung verwendet werden, oder die Antriebsarten können kombiniert werden. Zudem wurde bei den zuvor erwähnten Verstellvorrichtungen der Einfachheit halber davon ausgegangen, dass die Stützelemente oder Stützstangen 2 der Kopfstütze direkt mit dem Verstellelement 4 verbunden sind, wobei selbstverständlich auch möglich ist, dass diese in entsprechende Aufnahmen des Verstellelements 4 hineinragen und sich damit in Eingriff befinden.

## Patentansprüche

1. Verstellvorrichtung zur Höhenverstellung einer Kopfstütze (1), mit mindestens zwei Stützelementen (2),
mit einer Kopfstützenaufnahmeeinheit (20) zur Aufnahme der Kopfstütze (1, 2), wobei die Kopfstützenaufnahmeeinheit (20) in mindestens eine Verstellrichtung (A) verstellbare Verstellmittel (4) zur Höhenverstellung der von der Kopfstützenaufnahmeeinheit (20) aufgenommenen Kopfstütze (1, 2) umfasst, und
mit Antriebsmitteln (8) zum Erzeugen einer Verstellbewegung zum Verstellen der Verstellmittel (4),
wobei jedem Stützelement (2) ein separates Übertragungsmittel (6) und ein separates Verstellmittel (4) zugeordnet ist, und
wobei jedes Übertragungsmittel (6) die Verstellbewegung der Antriebsmittel (8) auf das dem jeweiligen Stützelement zugeordnete Verstellmittel (4) überträgt,
**dadurch gekennzeichnet,**
**dass** die Verstellvorrichtung gemeinsame Übertragungsmittel (6) zur Übertragung der Verstellbewegung der Antriebsmittel auf Verteilmittel (22) umfasst, wobei die Verteilmittel (22) derart ausgestaltet sind, dass sie die Verstellbewegung in gleichem Umfang von den gemeinsamen Übertragungsmitteln (6) auf die separaten Übertragungsmittel (6A) übertragen.

2. Verstellvorrichtung nach Anspruch 1,
**dadurch gekennzeichnet,**
**dass** die Kopfstützenaufnahmeeinheit (20) mindestens zwei Aufnahmeeinheiten umfasst, wobei jede der mindestens zwei Aufnahmeeinheiten (20) jeweils einem der mindestens zwei Stützelemente zugeordnet und zur Aufnahme desselben ausgestaltet ist, wobei jeder der mindestens zwei Aufnahmeeinheiten eines der separaten Verstellmittel zugeordnet ist und wobei die Verstellmittel voneinander beabstandet sind.

3. Verstellvorrichtung nach Anspruch 1 oder 2,
**dadurch gekennzeichnet,**
**dass** die Übertragungsmittel (6, 6A) flexibel ausgestaltet sind.

4. Verstellvorrichtung nach einem der Ansprüche 1 bis 3,
**dadurch gekennzeichnet,**
**dass** die Antriebsmittel (8) einen Elektromotor (10) zum Erzeugen der Verstellbewegung umfassen.

5. Verstellvorrichtung nach einem der vorhergehenden Ansprüche,
**dadurch gekennzeichnet,**
**dass** die Antriebsmittel (8) Getriebemittel (11, 12) zur Übertragung der Verstellbewegung auf die Übertragungsmittel (6, 16) umfassen.

6. Verstellvorrichtung nach einem der vorhergehenden Ansprüche,
**dadurch gekennzeichnet,**
**dass** die separaten Übertragungsmittel (6, 16) jeweils genau ein Übertragungselement zur Übertragung der Verstellbewegung von den Antriebsmitteln (8) auf die Verstellmittel (4) umfassen.

7. Verstellvorrichtung nach einem der vorhergehenden Ansprüche,
**dadurch gekennzeichnet,**
**dass** die Übertragungsmittel mindestens einen Bowdenzug (6) umfassen.

8. Verstellvorrichtung nach einem der vorhergehenden Ansprüche,
**dadurch gekennzeichnet,**
**dass** die Übertragungsmittel (6) derart ausgestaltet sind, dass sie auf die Verstellmittel (4) eine Kraft zur Verstellung der Verstellmittel (4) in eine erste Verstellrichtung übertragen können, und
**dass** die Kopfstützenaufnahmeeinheit (20) mit den Verstellmitteln (4) gekoppelte mechanische Energiespeichermittel (15) umfasst, welche derart ausgestaltet sind, dass sie bei einer Verstellung der Verstellmittel (4) in die erste Verstellrichtung Energie aufnehmen können, um eine Verstellung der Verstellmittel (4) in eine zweite Verstellrichtung unter Abgabe der aufgenommenen Energie zu unterstützen.

9. Verstellvorrichtung nach Anspruch 8,
**dadurch gekennzeichnet,**
**dass** die erste Verstellrichtung im Wesentlichen entgegengesetzt zu der zweiten Verstellrichtung ist.

10. Verstellvorrichtung nach Anspruch 8 oder 9,
**dadurch gekennzeichnet,**
**dass** die mechanischen Energiespeichermittel (15) elastisch ausgestaltet sind.

11. Verstellvorrichtung nach einem der Ansprüche 8 bis 10,
**dadurch gekennzeichnet,**
**dass** die mechanischen Energiespeichermittel Federmittel (15) umfassen.

12. Verstellvorrichtung nach Anspruch 11,
**dadurch gekennzeichnet,**
**dass** die Federmittel (15) derart mit den Verstellmitteln (4) gekoppelt sind, dass sie bei der Verstellung der Verstellmittel (4) in die erste Verstellrichtung gespannt werden, während sie durch einen Entspannvorgang die Verstellung der Verstellmittel (4) in die zweite Verstellrichtung unterstützen.

13. Verstellvorrichtung nach Anspruch 11,
**dadurch gekennzeichnet,**
**dass** die Federmittel (15) derart mit den Verstellmitteln (4) gekoppelt sind, dass sie bei der Verstellung der Verstellmittel (4) in die erste Verstellrichtung komprimiert werden, während sie durch einen Entkomprimierungsvorgang die Verstellung der Verstellmittel (4) in die zweite Verstellrichtung unterstützen.

14. Verstellvorrichtung nach einem der Ansprüche 8 bis 13,
**dadurch gekennzeichnet,**
**dass** die mechanischen Energiespeichermittel (15) auf mindestens einer Stützstange (2) der Stützelemente angeordnet sind, welche einerseits mit der Kopfstütze (1) und andererseits mit den Verstellmitteln (4) zu koppeln ist.

15. Verstellvorrichtung nach einem der vorhergehenden Ansprüche,
**dadurch gekennzeichnet,**
**dass** die Übertragungsmittel mindestens eine Welle (16) zur Übertragung der Verstellbewegung von den Antriebsmitteln (8) auf die Verstellmittel (4) umfassen.

16. Verstellvorrichtung nach Anspruch 15,
**dadurch gekennzeichnet,**
**dass** die mindestens eine Welle (16) derart mit den Verstellmitteln (4) gekoppelt ist, dass eine von den Antriebsmitteln (8) auf die mindestens eine Welle (16) übertragene Drehbewegung eine lineare Verstellbewegung der Verstellmittel (4) hervorruft.

17. Verstellvorrichtung nach Anspruch 15 oder 16,
**dadurch gekennzeichnet,**
**dass** ein mit den Verstellmitteln (4) über einen Gewindeeingriff zu koppelnder Endabschnitt der mindestens einen Welle (16) einen Spindelantrieb für die Verstellmittel (4) bildet.

18. Verstellvorrichtung nach Anspruch 17,
**dadurch gekennzeichnet,**
**dass** der Endabschnitt der mindestens einen Welle (16) ein Gewinde (17) aufweist, welches mit einem an den Verstellmitteln (4) ausgebildeten Gewinde in Eingriff zu bringen ist, um den Spindelantrieb zu bilden.

19. Verstellvorrichtung nach einem der Ansprüche 15 bis 18,
**dadurch gekennzeichnet,**
**dass** die mindestens eine Welle (16) eine flexible Welle ist.

20. Verstellvorrichtung nach einem der vorhergehenden Ansprüche,
**dadurch gekennzeichnet,**
**dass** die Verstellvorrichtung Betätigungsmittel (9) zum Betätigen der Antriebsmittel (8) umfasst.

21. Verstellvorrichtung nach einem der vorhergehenden Ansprüche,
**dadurch gekennzeichnet,**
**dass** die Antriebsmittel räumlich getrennt von der Kopfstützenaufnahmeeinheit (20) angeordnet sind.

22. Verstellvorrichtung nach einem der vorhergehenden Ansprüche,
**dadurch gekennzeichnet,**
**dass** die separaten Übertragungsmittel (6) derart ausgestaltet sind, dass sie jeweils die Verstellbewegung der Antriebsmittel (8) im Wesentlichen in eine gleiche Richtung auf die Verstellmittel (4) übertragen.

23. Sitz mit einer Kopfstütze (1, 2),
**dadurch gekennzeichnet,**
**dass** der Sitz eine Verstellvorrichtung nach einem der vorhergehenden Ansprüche zur Höhenverstellung der Kopfstütze (1, 2) umfasst.

## Claims

1. Adjuster for the vertical adjustment of a head restraint (1) having at least two support elements (2),
with a head restraint holding module (20) for holding the head restraint (1, 2), wherein the head restraint holding module (20) comprises adjustment means (4) variable in at least one adjustment direction (A) for vertical adjustment of the head restraint (1, 2) held by head restraint holding module (20), and
with drive means (8) for producing an adjustment movement for moving the adjustment means (4),
wherein a separate transmission means (6) and a separate adjustment means are assigned to each support element (2), and
wherein each transmission means (6) transfers the adjustment movement of the drive means (8) to the adjustment means (4) assigned to the respective support element,
**characterized in that**
the transmission means comprise common transmission means (6) for transfer of the adjustment movement of the drive means to distribution means (22),
wherein the distribution means (22) are designed in such a manner that they transfer the adjustment movement from the common transmission means (6) to the separate transmission means (6A) to the same extent.

2. Adjuster according to claim 1,
**characterized in that**
the head restraint holding module comprises at least two holding modules (20), wherein each of the at least two holding modules (20) is in each case associated with one of the at least two support elements and is designed to accommodate the same, wherein to each of the at least two holding modules one of said separate adjustment means is assigned, and wherein the adjustment means of the at least two holding modules are at a distance from one another.

3. Adjuster according to claim 1 or 2,
**characterized in that**
the transmission means (6, 6A) are designed to be flexible.

4. Adjuster according to any one of claims 1 to 3,
**characterized in that**
the drive means (8) comprise an electric motor (10) for producing the adjustment movement.

5. Adjuster according to any one of the preceding claims,
**characterized in that**
the drive means (8) comprise a gear mechanism (11, 12) for transfer of the adjustment movement to the transmission means (6, 16).

6. Adjuster according to any one of the preceding claims,
**characterized in that**
the separate transmission means (6, 16) each comprise exactly one transmission element for transfer of the adjustment movement of the drive means (8) to the adjustment means (4).

7. Adjuster according to any one of the preceding claims,
**characterized in that**
the transmission means comprise at least one Bowden cable (6).

8. Adjuster according to any one of the preceding claims,
**characterized in that**
the transmission means (6) is designed such that it can transfer a force to the adjustment means (4) for movement of the adjustment means (4) in a first adjustment direction, and that the head restraint holding module (20) comprises mechanical energy storage means (15) coupled with the adjustment means (4), which are designed such that they can take up energy on movement of the adjustment means (4) in the first adjustment direction, in order to assist movement of the adjustment means (4) in a second adjustment direction by releasing the stored energy.

9. Adjuster according to claim 8,
**characterized in that**
the first adjustment direction is essentially opposite to the second adjustment direction.

10. Adjuster according to claim 8 or 9,
**characterized in that**
the mechanical energy storage means (15) are flexibly formed.

11. Adjuster according to any one of claims 8 to 10,
**characterized in that**
the mechanical energy storage means comprise spring means (15).

12. Adjuster according to claim 11,
**characterized in that**
the spring means (15) are coupled with the adjustment means (4) in such a manner that it is tensioned on movement of the adjustment means (4) in the first adjustment direction, while it assists the movement of the adjustment means (4) in the second adjustment direction by a slackening action.

13. Adjuster according to claim 11,
**characterized in that**
the spring means (15) are coupled with the adjustment means (4) in such a manner that they are compressed on movement of the adjustment means (4) in the first adjustment direction, while they assist the movement of the adjustment means (4) in the second adjustment direction by a decompression action.

14. Adjuster according to any one of claims 8 to 13,
**characterized in that**
the mechanical energy storage means (15) are arranged on at least one support bar (2) of the support elements, which on the one hand is to be coupled with the head restraint (1) and on the other hand with the adjustment means (4).

15. Adjuster according to any one of the preceding claims,
**characterized in that**
the transmission means comprise at least one shaft (16) for transfer of the adjustment movement of the drive means (8) to the adjustment means (4).

16. Adjuster according to claim 15,
**characterized in that**
the at least one shaft (16) is coupled with the adjustment means (4) in such a manner that a rotational motion transferred by the drive means (8) to the at least one shaft (16) causes a linear adjustment movement of the adjustment means (4).

17. Adjuster according to claim 15 or 16,
**characterized in that**
a final section of the at least one shaft (16) to be coupled with the adjustment means (4) via a thread engagement forms a spindle drive for the adjustment means (4).

18. Adjuster according to claim 17,
**characterized in that**
the final section of the least one shaft (16) has a thread (17), which is to be engaged with a thread formed on the adjustment means (4), in order to form the spindle drive.

19. Adjuster according to any one of claims 15 to 18,
**characterized in that**
the at least one shaft (16) is a flexible shaft.

20. Adjuster according to any one of the preceding claims,
**characterized in that**
the adjuster comprises an actuation device (9) for operation of the drive means (8).

21. Adjuster according to any one of the preceding claims,
**characterized in that**
the drive means are arranged spatially separate from the head restraint holding module (20).

22. Adjuster according to any one of the preceding claims,
**characterized in that**
the separate transmission means (6) are designed such that in each case they transfer the adjustment movement of the drive means (8) essentially in a same direction to the adjustment means (4).

23. Seat with a head restraint (1, 2), **characterized in that** the seat comprises an adjuster according to any one of the preceding claims for the vertical adjustment of the head restraint (1, 2).

## Revendications

1. Dispositif de réglage pour le réglage en hauteur d'un appuie-tête (1), avec au moins deux éléments d'appui (2),
avec une unité de logement d'appui-tête (20) pour le logement de l'appuie-tête (1, 2), dans lequel l'unité de logement d'appui-tête (20) comporte des moyens de réglage (4) réglables dans au moins une direction de réglage (A) pour le réglage en hauteur de l'appuie-tête (1, 2) reçu par l'unité de logement d'appui-tête (20) et avec des moyens d'entraînement (8) pour la génération d'un mouvement de réglage pour le réglage des moyens de réglage (4),
dans lequel un moyen de transmission (6) et un moyen de réglage séparé (4) sont associés à chaque élément d'appui (2), et
dans lequel chaque moyen de transmission (6) transmet le mouvement de réglage des moyens d'entraînement (8) au moyen de réglage (4) associé à l'élément d'appui correspondant,
**caractérisé en ce que**
le dispositif de réglage comprend des moyens de transmission communs (6) pour la transmission du mouvement de réglage des moyens d'entraînement à des moyens de répartition (22), les moyens de répartition (22) étant conçus de telle manière qu'ils transmettent le mouvement de réglage dans la même mesure depuis les moyens de transmission communs (6) aux moyens de transmission séparés (6A).

2. Dispositif de réglage selon la revendication 1,
**caractérisé en ce que**
l'unité de logement d'appui-tête (20) comprend au moins deux unités de logement, chacune des au moins deux unités de logement (20) étant associée à l'un desdits au moins deux éléments d'appui et étant conçue pour la réception de celui-ci, au moins l'un des moyens de réglage séparé étant associé à chacune desdits au moins deux unités de logement et les moyens de réglage étant espacés les uns des autres.

3. Dispositif de réglage selon la revendication 1 ou 2,
**caractérisé en ce que**
les moyens de transmission (6, 6A) sont flexibles.

4. Dispositif de réglage selon l'une quelconque des revendications 1 à 3,
**caractérisé en ce que**
les moyens d'entraînement (8) comprennent un moteur électrique (10) pour la génération du mouvement de réglage.

5. Dispositif de réglage selon l'une quelconque des revendications précédentes,
**caractérisé en ce que**
les moyens d'entraînement (8) comprennent des engrenages (11, 12) pour la transmission du mouvement de réglage aux moyens de transmission (6, 16).

6. Dispositif de réglage selon l'une quelconque des revendications précédentes,
**caractérisé en ce que**
les moyens de transmission séparés (6, 16) comprennent chacun exactement un élément de transmission pour la transmission du mouvement de réglage entre les moyens d'entraînement (8) et les moyens de réglage (4).

7. Dispositif de réglage selon l'une quelconque des revendications précédentes,
**caractérisé en ce que**
les moyens de transmission comprennent au moins un câble Bowden (6).

8. Dispositif de réglage selon l'une quelconque des revendications précédentes,
**caractérisé en ce que**
les moyens de transmission (6) sont conçus de telle manière qu'ils peuvent transmettre aux moyens de réglage (4) une force pour le réglage des moyens de réglage (4) dans une première direction de réglage, et
**en ce que** l'unité de logement d'appui-tête (20) comprend des moyens d'accumulation d'énergie mécaniques (15) couplés aux moyens de réglage (4) qui sont conçus de manière à pouvoir, en cas de réglage des moyens de réglage (4) dans la première direction de réglage, accumuler l'énergie pour contribuer au réglage des moyens de réglage (4) dans une seconde direction de réglage en libérant l'énergie accumulée.

9. Dispositif de réglage selon la revendication 8,
**caractérisé en ce que**
le premier moyen de réglage est sensiblement opposé au second moyen de réglage.

10. Dispositif de réglage selon la revendication 8 ou 9,
**caractérisé en ce que**
les moyens d'accumulation d'énergie mécaniques (15) sont élastiques.

11. Dispositif de réglage selon l'une quelconque des revendications 8 à 10,
**caractérisé en ce que**
les moyens d'accumulation d'énergie mécaniques comportent de moyens à ressort (15).

12. Dispositif de réglage selon la revendication 11,
**caractérisé en ce que**
les moyens à ressort (15) sont couplés aux moyens de réglage (4) de telle manière qu'ils sont tendus dans la première direction de réglage lors du réglage des moyens de réglage (4) alors qu'ils contribuent au réglage des moyens de réglage (4) dans la seconde direction de réglage par un processus de détente.

13. Dispositif de réglage selon la revendication 11,
**caractérisé en ce que**
les moyens à ressort (15) sont couplés aux moyens de réglage (4) de telle manière qu'ils sont comprimés dans la première direction de réglage lors du réglage des moyens de réglage (4) alors qu'ils contribuent au réglage des moyens de réglage (4) dans la seconde direction de réglage par un processus de décompression.

14. Dispositif de réglage selon l'une quelconque des revendications 8 à 13,
**caractérisé en ce que**
les moyens d'accumulation d'énergie mécaniques (15) sont montés sur au moins une barre d'appui (2) des éléments d'appui qui peut être couplée, d'une part, à l'appuie-tête (1) et, d'autre part, aux moyens de réglage (4).

15. Dispositif de réglage selon l'une quelconque des revendications précédentes,
**caractérisé en ce que**
les moyens de transmission comprennent au moins un arbre (16) pour la transmission du mouvement de réglage entre les moyens d'entraînement (8) et les moyens de réglage (4).

16. Dispositif de réglage selon la revendication 15,
**caractérisé en ce que**
ledit au moins un arbre (16) est couplé aux moyens de réglage (4) de telle manière qu'un mouvement de rotation transmis par les moyens d'entraînement (8) sur ledit au moins un arbre (16) entraîne un mouvement de réglage linéaire des moyens de réglage (4).

17. Dispositif de réglage selon la revendication 15 ou 16,
**caractérisé en ce qu'**
un tronçon d'extrémité dudit au moins un arbre (16) destiné à être couplé aux moyens de réglage (4) par une prise filetée forme un entraînement de broche pour les moyens de réglage (4).

18. Dispositif de réglage selon la revendication 17,
**caractérisé en ce que**
le tronçon d'extrémité dudit au moins un arbre (16) comporte une filetage (17) qui est destiné à venir en prise avec un filetage formé dans les moyens de réglage (4) pour former l'entraînement de broche

19. Dispositif de réglage selon l'une quelconque des revendications 15 à 18,
**caractérisé en ce que**
ledit au moins un arbre (16) est un arbre flexible.

20. Dispositif de réglage selon l'une quelconque des revendications précédentes,
**caractérisé en ce que**
le dispositif de réglage comprend des moyens d'actionnement (9) pour actionner les moyens d'entraînement (8).

21. Dispositif de réglage selon l'une quelconque des revendications précédentes,
**caractérisé en ce que**
les moyens d'entraînement sont disposés dans l'espace de manière à être séparés de l'unité de logement d'appui-tête (20).

22. Dispositif de réglage selon l'une quelconque des revendications précédentes,
**caractérisé en ce que**
les moyens de transmission séparés (6) sont conçus de telle manière qu'ils transmettent chacun le mouvement de réglage des moyens d'entraînement (8) aux moyens de réglage (4) sensiblement dans une direction identique.

23. Siège avec un appuie-tête (1, 2),
**caractérisé en ce que**
le siège comprend un dispositif de réglage selon l'une quelconque des revendications précédentes pour le réglage en hauteur de l'appuie-tête (1, 2).
